Europäisches Patentamt

(19) **European Patent Office**

**Office européen des brevets**

(11) Numéro de publication: **0 066 494**
**B1**

(12) **FASCICULE DE BREVET EUROPEEN**

(45) Date de publication du fascicule du brevet:
08.01.86

(51) Int. Cl.⁴: **G 01 H 1/00, G 01 M 1/22**

(21) Numéro de dépôt: **82400897.3**

(22) Date de dépôt: **14.05.82**

(54) Système d'analyse par visualisation des mouvements vibratoires d'une machine tournante.

(30) Priorité: **21.05.81 FR 8110135**

(43) Date de publication de la demande:
**08.12.82 Bulletin 82/49**

(45) Mention de la délivrance du brevet:
**08.01.86 Bulletin 86/2**

(84) Etats contractants désignés:
**CH DE GB IT LI NL**

(56) Documents cités:
**FR - A - 2 266 148**
**US - A - 4 135 244**

**POLYTECHNISCH TIJDSCHRIFT: GELUID EN TRILLING, vol.34, no.4, 1979, Rijswijk (NL) R.G. HARKER: "Instrumentatiepakket voor turbinebewaking", pages 111-116**
**MEASUREMENT CONTROL, vol.13, no.3, mars 1980, Londres (GB) I.R. HITCHEN: "Vibration monitoring for rotating machinery, pages 97-102**
**MACHINE DESIGN, vol.52, no.1, janvier 1980, Ohio (US) C.A. EUBANKS: "Diagnosing rotating equipment ills", pages 86 à 92**

(73) Titulaire: **SOCIETE NATIONALE ELF AQUITAINE, Tour Aquitaine - Cédex 4, F-92080 Paris la Défense (FR)**

(72) Inventeur: **Senicourt, Jacques Marie, 34, Avenue Vauban, F-93250 Villemomble (FR)**
Inventeur: **Tebec, Jean-Louis, 32, Allée des Troènes, F-91190 Gif Sur Yvette (FR)**

(74) Mandataire: **Mongrédien, André et al, c/o BREVATOME 25, rue de Ponthieu, F-75008 Paris (FR)**

ACTORUM AG

## Description

La présente invention concerne un système d'analyse par visualisation des mouvements vibratoires d'une machine tournante.

Ce système d'analyse permet notamment d'effectuer un entretien prédictif des machines tournantes et en particulier des grosses machines pouvant comporter plusieurs arbres supportés par des parliers fluides tels que des paliers à huile, des paliers hydrostatiques, des paliers à air, etc.

Depuis quelques années, l'entretien des machines tournantes évolue rapidement. Cependant, dans le cas de grosses machines sur paliers fluides, de nombreuses difficultés freinent cette évolution. A cause de leur importance stratégique dans les installations industrielles, ces machines doivent pouvoir tourner très longtemps et sans arrêt.

En cas de panne, ou simplement pour une révision, le coût de leur immobilisation est considérable, aussi l'entretien préventif doit-il faire place à l'entretien prédictif qui, seul, permet d'agir au moment opportun. Ce type d'entretien suppose obligatoirement un diagnostic précis de l'état de la machine; il implique donc nécessairement la compréhension des signaux symptomatiques de son fonctionnement.

Des études ont montré que la plupart des moyens d'analyse employés jusqu'à ce jour sont peu adaptés à ce genre d'investigation pour les grosses machines qui sont pourtant celles qui ont le plus besoin de cette surveillance. La surveillance se réduit trop souvent encore à des «sonnettes d'alarme» qui plongent le responsable de l'entretien dans l'embarras sans lui fournir pour autant des éléments nécessaires à une prise de décision concernant l'arrêt ou la poursuite du fonctionnement de la machine considérée.

Les différentes techniques de surveillance, connues jusqu'à ce jour peuvent être regroupées en trois catégories qui mettent respectivement en œuvre:

– la comparaison avec des niveaux vibratoires prédéterminés,
– l'analyse spectrale en fréquence,
– la trajectographie Lissajous ou méthode des orbites.

On va brièvement rappeler la limitation de ces différentes techniques de surveillance dans le cas de machines à paliers fluides.

En ce qui concerne la première catégorie, les signaux recueillis dépendent des caractéristiques de la machine, de son montage, de ses accouplements, de ses fondations, mais aussi de l'endroit précis du captage de ces signaux (ventre ou nœud de vibration, palier ou bâti, etc); de ce fait, les seuils préconisés par les normes ne restent qu'indicatifs.

Que faire lorsqu'un seuil est atteint, faut-il arrêter la machine? Les appareillages plus sophistiqués, qui indiquent la tendance de l'évolution de l'usure d'une machine ou qui calculent la date où tel niveau sera atteint, restent basés sur le même principe; ils ne répondent pas plus à la question. L'information captée au départ est insuffisante pour expliquer le comportement de la machine. Aucun traitement électronique ou informatique ne peut rajouter l'information manquante.

Lorsque de nombreuses machines identiques sont surveillées par ce procédé, il est possible empiriquement ou statistiquement, de fixer le niveau de l'alarme. Mais lorsque les équipement sont uniques, ce qui est souvent le cas des machines très importantes, cette méthode est inexploitable.

En ce qui concerne la deuxième catégorie, la présence des films fluides des paliers et en particulier des films d'huile, qui introduisent dans l'ensemble mécanique des liaisons fortement non linéaires sur le plan vibratoire (la raideur d'un film d'huile n'étant pas constante), rend par exemple, quasiment impossible la détermination des mouvements du rotor de la machine à partir de l'analyse d'un signal recueilli sur le bâti de celle-ci, au moyen d'un accéléromètre. L'examen du spectre laisse essentiellement apparaître les réponses vibratoires des structures et de l'environnement de la machine et l'on n'y trouve que fort peu de renseignements sur la cause même des vibrations. L'interprétation des résultats reste très délicate et exige des spécialistes. Cette technique de surveillance se prête donc mal à une surveillance en milieu industriel.

La troisième catégorie de technique de surveillance consiste à étudier les mouvements de l'arbre de la machine dans les paliers associés à l'aide de deux capteurs, par exemple, du type à courants de Foucault, disposés à 90° l'un de l'autre et à une certaine distance de l'arbre. Les signaux émis par ces deux capteurs sont proportionnels à ladite distance et sont envoyés sur un oscilloscope à deux entrées X et Y de façon à former une courbe de Lissajous correspondant au mouvement de l'arbre dans les paliers (voir Polytechnische Zeitschrift: Geluid en Trilling; vol. 34, no 4, 1979, pages 111–116).

Parmi les critiques que l'on peut fournir sur cette technique de surveillance, figurent: l'aspect relatif de la mesure; l'absence de renseignement sur la position et la dimension de la trajectoire par rapport au jeu disponible entre l'arbre et le palier. En effet, cette trajectoire ne représente pas le mouvement du centre de l'arbre car le palier est lui-même animé d'un mouvement propre. Sauf dans quelques cas simples, ce mode de visualisation aboutit rapidement à former des images complexes, impossibles à exploiter.

L'invention a donc pour objet un système d'analyse par visualisation des mouvements vibratoires d'une machine tournante permettant de remédier à ces inconvénients.

Elle permet en particulier la détermination des mouvements absolus de l'arbre d'une machine dans ses paliers, ainsi que la détermination des mouvements des paliers eux-mêmes. De plus, l'interprétation des signaux obtenus selon l'invention, est facile à faire par les responsables de l'entretien de la machine, responsables qui sont le plus souvent des mécaniciens.

De façon plus précise, l'invention a pour objet un système d'analyse par visualisation des mouvements vibratoires d'une machine tournante comportant au moins un arbre supporté par au moins un palier. Ce système est défini par la revendication 1.

Selon un mode préféré de réalisation de l'invention, l'un des premiers capteurs est aligné avec l'un des seconds capteurs et l'autre premier capteur est aligné avec l'autre second capteur.

De préférence, les premiers capteurs sont des capteurs de déplacement et les seconds capteurs sont soit des accéléromètres, soit des capteurs de vitesse, soit des capteurs de déplacement.

Selon un autre mode préféré de réalisation de l'invention, ce système comprend, aussi, des moyens permettant de supprimer les signaux électriques parasites issus des premiers capteurs qui ne sont pas fonction des déplacements de l'arbre.

Selon un autre mode préféré de réalisation de l'invention, les moyens de visualisation comprennent aussi des moyens permettant de ralentir l'animation des deux cercles. Dans ce type de visualisation, l'angle que font les deux premiers capteurs entre eux et les deux seconds capteurs entre eux est de préférence égal à 90°.

Selon un autre mode préféré de réalisation de l'invention, les moyens pour engendrer les deux cercles animés sont constitués d'un générateur engendrant deux ensembles de signaux électriques sinusoïdaux déphasés d'un angle de $\pi/2$ et de moyens pour composer les signaux électriques fonction des déplacements des arbres et des paliers et les signaux électriques sinusoïdaux.

Selon l'invention, les moyens de visualisation comprennent, par exemple:

– une unité de visualisation à deux entrées X et Y muni d'un écran et d'une commande de Wehnelt; et
– un système de multiplexage à quatre entrées par palier et à deux sorties correspondant aux entrées X et Y de l'unité de visualisation.

Selon un autre mode préféré de réalisation de l'invention, le système, permettant l'analyse des mouvements vibratoires de plusieurs machines tournantes comportant chacune au moins un arbre supporté par au moins un palier, comprend, encore, des moyens permettant la mémorisation des positions respectives des cercles animés correspondant à chacune desdites machines.

Le système de l'invention permet de déterminer les mouvements de l'arbre et du palier d'une machine aussi bien de façon qualitative que quantitative. En conséquence le système de l'invention peut être muni de moyens permettant de mesurer directement, par exemple sur l'écran de l'unité de visualisation, les valeurs des déplacements des arbres et des paliers ainsi que les déphasages des différents mouvements observés.

D'autres avantages et caractéristiques de l'invention ressortiront mieux de la description qui suit, donnée à titre explicatif mais nullement limitatif, en référence aux figures annexées, sur lesquelles:

– la figure 1 représente un schéma synoptique du système d'analyse conformément à l'invention,
– la figure 2 représente un schéma synoptique des premiers capteurs du type à courants de Foucault et de l'électronique associée,
– la figure 3 représente un schéma synoptique de l'eléctronique associée aux seconds capteurs du type capteur de vitesse ou du type accélomètre,
– la figure 4 représente différents résultats obtenus avec le système de l'invention, sur une machine comportant un arbre supporté par deux paliers; la figure 4a représente la machine à l'arrêt; la figure 4b représente la machine tournant de façon correcte; les figures 4c et 4d représentent la machine comportant un balourd statique; la figure 4e représente la machine comportant un balourd dynamique; et la figure 4f représente la machine soumise à un effort fixe.

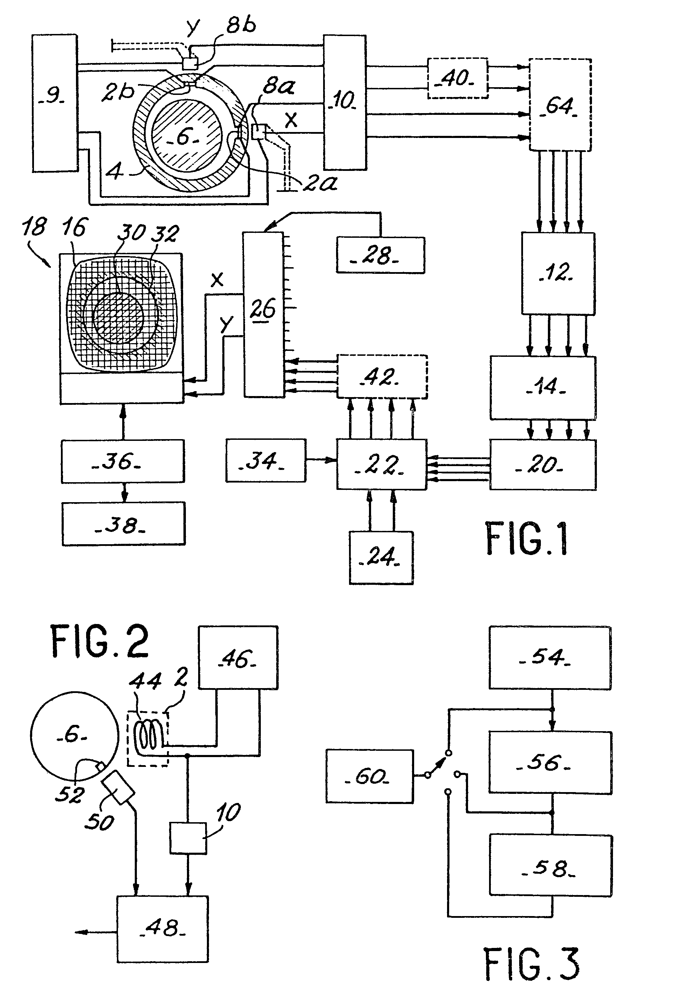

Sur la figure 1, on a représenté un schéma synoptique du système d'analyse de l'invention. Afin de faciliter la description de ce système, on a représenté une machine tournante comportant un arbre supporté par un seul palier, mais comme on l'a déjà dit précédemment, l'invention s'applique de façon générale à des machines comportant un ou plusieurs arbres, disposés de toutes les façons possibles les uns par rapport aux autres, supportés par un ou plusieurs paliers.

Dans le cas d'un arbre supporté par un seul palier, le système d'analyse, selon l'invention, comprend deux premiers capteurs 2a et 2b généralement identiques fixés dans le palier 4 de la machine tournante et en regard de l'arbre 6 supporté par le palier 4, deux seconds capteurs 8a et 8b généralement identiques disposés au niveau du palier 4 et une électronique d'analyse associée à ces premiers et seconds capteurs.

Ces capteurs, lorsque la machine tourne, émettent des signaux électriques correspondant aux vibrations de la machine. Les deux premiers capteurs 2a et 2b émettent des signaux électriques correspondant aux déplacements relatifs de l'arbre 6 par rapport au palier 4 et les deux seconds capteurs 8a et 8b émettent des signaux électriques correspondant aux déplacements absolus du palier 4. Les déplacements absolus du palier 4 sont déterminés par rapport à un système de référence. Ce système de référence est par exemple la pièce ou le laboratoire dans lequel est installée la machine tournante. Dans ce cas, les seconds capteurs peuvent être fixés au sol de la pièce ou du laboratoire servant de repère «galiléen».

Les premiers capteurs 2a et 2b font entre eux un certain angle égal par exemple à 90°, de même que les seconds capteurs 8a et 8b. De plus, le premier capteur 2a et le second capteur 8a peuvent être alignés, ainsi que le premier capteur 2b et le second capteur 8b. Les capteurs 2a et 8a sont par exemple dirigés suivant un axe noté X et les capteurs 2b et 8b suivant un axe Y.

Ces premiers et seconds capteurs sont chacun associé à une électronique de commande et à une électronique de détection portant respectivement les références 9 et 10 dépendant du type de capteur utilisé. Cette électronique ainsi que les différents types de capteurs seront décrits ultérieurement.

Les éléments représentés en tirets, sur la figure 1, ne sont pas nécessaires et seront décrits ultérieurement.

Les signaux électriques issus de l'électronique de détection 10 peuvent être amplifiés au moyen d'un amplificateur 12. Ces signaux sont ensuite combinés deux à deux au moyen d'un circuit électronique 14 de façon à déterminer les signaux électriques correspondant aux mouvements absolus de l'arbre 6, c'est-à-dire les mouvements de l'arbre par rapport au système de référence. Cette combinaison se fait en additionnant ou en soustrayant le signal électrique fourni par l'électronique de détection 10, correspondant au premier capteur 2a, au signal électrique fourni par l'électronique de détection 10, correspondant au second capteur 8a, et en additionnant ou en soustrayant le signal électrique fourni par l'électronique de détection 10, correspondant au premier capteur 2b, au signal électrique fourni par l'électronique de détection 10, correspondant au second capteur 8b. Les quatre signaux électriques issus des moyens de combinaison 14 correspondent alors aux déplacements absolus de l'arbre 6 et du palier 4 suivant les axes X et Y.

En vue d'une visualisation des quatre signaux électriques combinés, par exemple sur un écran 16 d'une unité de visualisation 18 telle qu'un oscilloscope du type tube à rayonnement cathodique, l'amplitude de ces signaux peut être réglée et calibrée au moyen d'un circuit de calibrage 20, puis ces signaux peuvent être envoyés dans un circuit électronique 22 relié à l'unité de visualisation 18.

De plus, un générateur 24 est prévu pour engendrer deux signaux électriques sinusoïdaux déphasés d'un angle $\pi/2$. Ces signaux sinusoïdaux sont injectés dans le circuit électronique 22 de façon à les composer avec les quatre signaux dont l'amplitude a été réglée et calibrée au préalable dans le circuit 20.

Les quatre signaux électriques issus du circuit 22 sont ensuite envoyés vers un système de multiplexage comprenant un multiplexeur 26 à quatre entrées et deux sorties reliées directement à l'entrée X et à l'entrée Y de l'unité de visualisation 18 formée d'un oscilloscope, ce multiplexeur 26 étant commandé par un générateur 28. Les deux signaux issus du circuit 22 et correspondant aux mouvements de l'arbre 6 dans son palier 4, sont sélectionnés par le multiplexeur 26, puis envoyés sur les entrées X et Y de l'unité de visualisation 18 de façon à obtenir un cercle 30 sur l'écran 16 de l'unité de visualisation. Ensuite les deux signaux issus du circuit 22 et correspondant aux mouvements du palier 4, sont sélectionnés par le multiplexeur 26, puis envoyés sur les entrées X et Y de l'unité de visualisation 18 de façon à obtenir un cercle 32 sur l'écran 16 de l'unité de visualisation.

Ces cercles 30 et 32 représentent l'arbre 6 dans son palier 4, ce qui correspond, en fait, à une coupe de la machine suivant un plan perpendiculaire à l'axe longitudinal de la machine au niveau du palier.

Ces cercles 30 et 32 sont animés, c'est-à-dire que ces cercles se déplacent sur l'écran. Ils permettent de visualiser les déplacements de l'arbre et du palier, ces déplacements correspondant aux mouvements vibratoires de la machine. Ceci permet la restitution des déformations mécaniques de la machine, si elles existent, et facilite l'interprétation des phénomènes vibratoires de celle-ci par des mécaniciens généralement peu habitués aux procédés électroniques de traitement de signaux.

De plus, le système d'analyse selon l'invention permet la restitution des mouvements absolus et relatifs de l'arbre et les mouvements absolus du palier et non uniquement les mouvements relatifs comme le font les systèmes de l'art antérieur.

Le système décrit jusqu'ici concernait une machine comportant un seul arbre supporté par un seul palier. Dans le cas d'une machine à plusieurs arbres et plusieurs paliers, ce qui est généralement le cas pour de grosses machines, un circuit électronique 34 relié au circuit électronique 22 est prévu. Ce circuit 34 permet de positionner les différents cercles 30 et 32 les uns par rapport aux autres, correspondant respectivement aux différents arbres et différentes paliers de la machine, de façon à reproduire l'ensemble de la machine sur l'écran de l'unité de visualisation, c'est-à-dire le positionnement réel des différents arbres et des différents paliers. La morphologie de la machine est, bien entendu, mise en mémoire au préalable dans ce circuit 34.

Dans le cas d'une machine à plusieurs arbres et plusieurs paliers, le nombre d'entrées du multiplexeur 26 est, bien entendu, différent de quatre. Par exemple, dans le cas d'un arbre supporté par deux paliers, ce multiplexeur comprendra huit entrées, dans le cas de deux arbres supportés chacun par deux paliers, ce multiplexeur comprendra seize entrées, etc. Il est à noter que la fréquence de commande du multiplexeur peut être modifiée. De plus, le nombre de capteurs utilisés est fonction du nombre d'arbres et de paliers de la machine.

La visualisation des cercles animés se fait en temps réel et simultanément pour plusieurs paliers et les parties correspondantes des arbres.

De plus, selon l'invention, le système d'analyse peut être muni de moyens 36 reliés à l'unité de visualisation 18 permettant de ralentir électroniquement les images visualisées afin d'obtenir une interprétation plus précise et plus facile des phénomènes vibratoires et, en particulier, des déphasages entre les différents mouvements.

Ces moyens 36, dans le cas d'une unité de visualisation 18 comportant une commande de Wehnelt ou une entrée Z (non représentée), ce qui est généralement le cas, sont constitués d'un stroboscope de fréquence réglable connecté sur ladite commande.

La commande de Wehnelt est alors attaquée par des impulsions dont la fréquence est voisine de celle des phénomènes vibratoires que l'on étudie. Une immobilisation des cercles permet d'indiquer la fréquence de vibrations de la machine.

De plus, ce stroboscope 36 peut être relié à un dispositif 38 permettant d'afficher la fréquence d'animation des cercles, c'est-à-dire la fréquence des mouvements observés.

Le système de l'invention est conçu de façon à rendre directement accessible la mesure des déplacements de l'arbre et du palier ainsi que les fréquences et les déphasages des mouvements observés. Ces mesures peuvent être faites par exemple en utilisant un écran d'oscilloscope quadrillé. Bien entendu tout autre moyen de mesure peut être envisagé.

On a décrit jusqu'à présent un système permettant une visualisation des phénomènes sur une unité de visualisation telle qu'un oscilloscope à deux entrées X et Y, mais bien entendu, un système de visualisation à plusieurs entrées X et Y peut être envisagé. Dans ce cas, le système de multiplexage pourra être supprimé. Comme autre moyen de visualisation, on peut utiliser un écran vidéo (télévision). De plus, les cercles animés peuvent être enregistrés et n'être visualisés qu'éventuellement.

Selon l'invention, le système d'analyse peut être muni d'un circuit électronique 40 permettant, si on le désire, de sélectionner, soit les mouvements absolus de l'arbre et du palier, soit les mouvements relatifs de l'arbre par rapport au palier en immobilisant sur l'écran de l'oscilloscope le cercle animé 32, correspondant au mouvement du palier. Ceci permet par exemple de voir la façon dont se déplace l'arbre dans son palier.

Dans le cas où plusieurs machines sont installées dans un même lieu, un seul système d'analyse peut suffire. Cependant, afin d'éviter tous les réglages, la mise en mémoire de la morphologie de la machine, le positionnement et la dimension des cercles sur l'écran, etc. une mémoire 42 reliée au circuit électronique 22 peut être prévue afin de mémoriser les cercles représentant la morphologie de chaque machine.

Il est à noter que l'emplacement relatif des différents circuits, tel que représenté sur la figure 1, peut être modifié de toutes les façons possibles. Par exemple, le circuit de réglage 20 et l'amplificateur 12 peuvent être placés n'importe où entre l'électronique de détection 10 associée au capteur et l'oscilloscope 18.

Comme on l'a dit précédemment, les premiers et les seconds capteurs peuvent être de différents types et les électroniques de commande 9 et de détection 10 qui leur sont associées sont fonction de ce type.

Les premiers capteurs 2a et 2b qui peuvent être identiques, sont des capteurs de déplacements comme par exemple des capteurs sans contact du type à courants de Foucault ou des capteurs du type capacitif ou inductif et les seconds capteurs 8a et 8b qui peuvent être identiques, sont par exemple soit, des capteurs de déplacements du type sans contact à courants de Foucault ou du type sismique (capteur à masse suspendue), soit des capteurs de vitesse (capteur électrodynamique), soit des accéléromètres (capteurs piézoélectriques).

Lorsque l'on utilise comme seconds capteurs des capteurs de déplacement sans contact, ces capteurs sont disposés en regard des palier, comme schématisé sur la figure 1, tandis que lorsque l'on utilise d'autre types de capteurs, lesdits seconds capteurs sont disposés sur le palier.

Sur la figure 2, on a représenté un schéma synoptique des premiers capteurs et des électroniques de commande et de détection associées. Ces premiers capteurs sont du type sans contact à courants de Foucault.

Ces capteurs sont généralement constitués d'un bobinage 44 commandé par un oscillateur 46 engendrant une fréquence de 1 à 2 $MH_z$. Les signaux fournis par ces capteurs sont ensuite détectés par le détecteur 10 qui leur est associé. Du fait que la fréquence appliquée au bobinage est élevée, les courants de Foucault induits dans l'arbre 6 de la machine sont superficiels. Comme ces courants sont superficiels, tout défaut de l'arbre modifie le signal fourni par ces capteurs. Il est donc nécessaire de supprimer tous les signaux parasites résultant de ces défauts. Ces signaux parasites sont généralement connus sous le mot anglosaxon de «run-out».

Les défauts d'un arbre sont par exemple liés au fait qu'un arbre n'est jamais rond, qu'il comporte des rayures, des aspérités, que le matériau le constituant est rarement homogène, etc.

Les signaux électriques correspondant aux défauts de l'arbre sont enregistrés au préalable et mémorisés ainsi que leurs emplacements sur l'arbre. Les défauts d'un arbre et leur emplacement sur cet arbre sont généralement connus sous l'expression carte de l'arbre. Ces signaux parasites sont ensuite soustraits, point par point, des signaux correspondant aux vibrations de l'arbre. L'électronique permettant la soustraction des signaux parasites et leur mémorisation porte la référence générale 48.

Le repérage de l'emplacement de ces défauts est obtenu au moyen d'un capteur supplémentaire par exemple à courants de Foucault portant la référence 50 situé en regard d'un repère 52 solidaire de l'arbre, ce repère pouvant être tout simplement une rayure pratiquée dans l'arbre. Ce capteur est en général disposé dans le palier, comme le sont les premiers capteurs 2a et 2b.

La mémorisation des défauts est effectuée au préalable au moyen d'un dispositif identique à celui représenté sur la figure 2, mais dans ce cas l'électronique 48 représente uniquement une mémoire. L'emplacement de ces défauts est repéré par le déphasage existant entre les capteurs 2 et 50. Cette mémorisation est effectuée en faisant tourner l'arbre à faible vitesse pour ne pas engendrer de vibrations.

Le système permettant le repérage des défauts de l'arbre ainsi que la soustraction des signaux parasites correspondants a été décrit de façon détaillée dans le brevet américain n° 4 134 303 de Davis intitulé «Method and circuit for providing electrical run-out reduction in rotating shaft vibration detection system».

Bien entendu, la suppression des signaux parasites (run-out) peut être réalisée sur tous les types de premiers capteurs utilisables.

En dehors, de l'électronique propre de commande et de détection associée à chacun des seconds capteurs 8a et 8b (amplificateur de charges, pont de jauges...) ces seconds capteurs sont associés à une électronique complémentaire.

Sur la figure 3, on a représenté un schéma synoptique de l'électronique complémentaire associés à ces capteurs lorsque ceux-ci sont des capteurs de vitesse ou des accéléromètres. Cette électronique est principalement constituée d'un filtre passe haut réglable 54, permettant de supprimer les très basses fréquences qui sont fonction de la vitesse de rotation de la machine, ce filtre 54 étant relié à un seul intégrateur 56, dans le cas d'utilisation de capteurs de vitesse, et relié à deux intégrateurs 56 et 58 reliés électriquement l'un à l'autre, dans le cas d'utilisation d'accéléromètres.

Les signaux électriques issus de l'intégrateur 56 ou des deux intégrateurs 56 et 58 peuvent être ensuite amplifiés au moyen d'un amplificateur 60. Cette amplification sert à obtenir des signaux de même amplitude que ceux fournis par les premiers capteurs 2a et 2b.

Lorsque l'on utilise des capteurs présentant une polarisation, c'est-à-dire que les signaux issus de ces capteurs présentent une composante continue, le système d'analyse selon l'invention doit être muni d'un circuit électronique 64 relié par exemple à l'amplificateur 12 (figure 1) permettant de supprimer la polarisation des signaux électriques issus desdits capteurs. En effet, certains capteurs par exemple à courants de Foucault émettent un signal polarisé négativement (composante continue négative) tandis que d'autres capteurs émettent un signal polarisé positivement (composante continue positive). La combinaison des signaux émis par les capteurs dans le circuit électronique 14 doit se faire avec des signaux sans polarisation, il est donc nécessaire de la supprimer.

Afin de mettre au point le système d'analyse selon l'invention, et afin d'avoir une bonne connaissance de la signature caractéristique des défauts de fonctionnement d'une machine, on a effectué différents essais au moyen d'un banc d'essais comportant un arbre supporté par deux paliers alimentés en huile. L'ensemble, entraîné par un moteur à vitesse variable permet de recréer artificiellement des défauts semblables à ceux rencontrés en pratique.

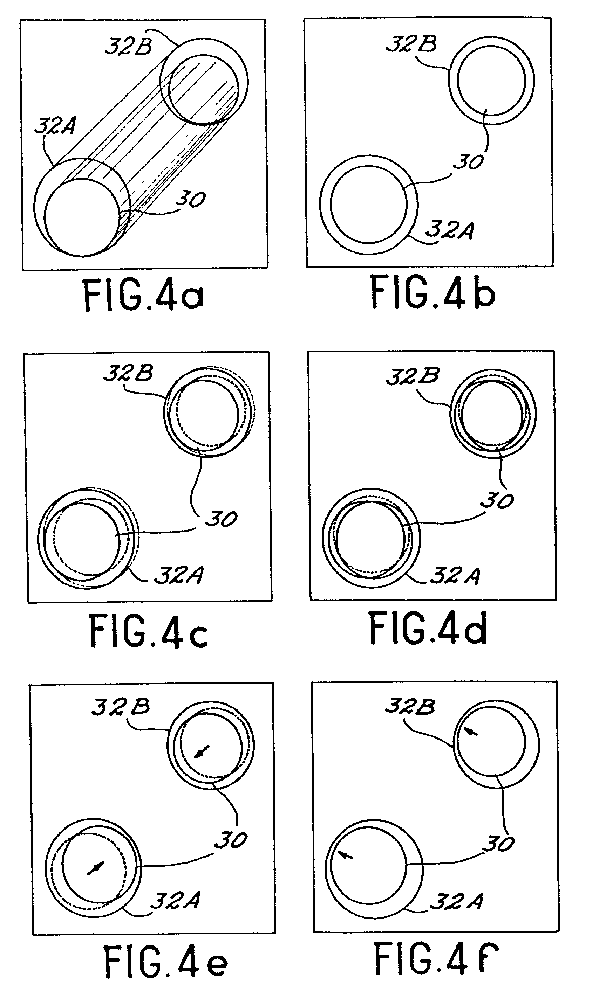

Quelques uns des résultats obtenus ont été représentés sur la figure 4. Il est à noter que la dimension des images sur l'écran de l'oscilloscope n'a rien à voir avec les dimensions réelles de la machine, mais que les amplitudes des vibrations (mouvements de l'arbre et des paliers), les jeux (épaisseur du film de fluide) entre les cercles représentant l'arbre et les paliers sont cohérents avec ce qui se passe dans la machine. Le cercle référencé 30 représente l'arbre de la machine, les cercles référencés 32a et 32b représentent les deux paliers supportant ledit arbre.

La figure 4a représente la machine à l'arrêt. Sur cette figure, l'arbre, sous l'effet de son poids, repose dans les paliers.

La figure 4b représente la machine tournant à 2000 tours par minute (tr/min). On constate qu'aucun défaut n'affecte le fonctionnement de la machine. L'arbre est bien équilibré, il tourne au centre des paliers sur un film d'huile d'épaisseur constante. Il n'y a pas de mouvements vibratoires visibles de l'arbre ou des paliers.

Les figures 4c et 4d représentent un balourd statique. La figure 4c représente les mouvements absolus de l'arbre et du palier, la figure 4d représente les mouvements relatifs de l'arbre dans le palier; ceci est rendu possible par le sélecteur de mouvements 40 (figure 1). On constate que, lorsque les cercles sont animés, l'arbre se déplace avec un même déphasage dans les deux paliers. La visualisation des déphasages est obtenue à l'aide du ralenti électronique 36. Le déphasage nul est déterminé par le fait que le déplacement de l'arbre dans les deux paliers est identique.

La figure 4e représente les mouvements relatifs de l'arbre dans ses paliers, l'arbre étant alors soumis à un balourd dynamique. On constate que les déplacements de l'arbre dans les deux paliers, c'est-à-dire le déphasage dans les deux paliers, sont opposés. Sur cette figure 4c, la machine tourne à 2000 tr/min.

La figure 4f représente un effort fixe. Ceci se traduit par un déplacement de l'arbre dans son ensemble et dans le sens de la force. La machine tourne à 2000 tr/min.

En plus, de ces différents résultats, le système d'analyse permet de montrer des désalignements d'arbres dans le cas d'une machine ayant plusieurs arbres mis bout à bout, des déserrages de paliers, des excitations extérieures, etc. De plus, toute combinaison des différents défauts cités ci-dessus peut être envisagée et analysée grâce au système de l'invention.

Le système de l'invention grâce à la visualisation des phénomènes vibratoires sous la forme de déplacements permet une interprétation facile des phénomènes vibratoires auxquels est soumise la machine.

Ce système d'analyse est, comme on l'a dit précédemment, surtout applicable à des grosses machines à paliers fluides, car les méthodes statistiques ne sont pas possibles pour ces machines vu leur petit nombre. De plus, l'existence d'un palier fluide permet de bien voir l'arbre se déplacer dans les paliers.

Cependant, le système de l'invention est applicable à toute machine et même à des petites machines montées sur paliers à railements. En effet, au cours du temps, les raillements s'usent et un certain jeu apparaît, dans ce cas, avec le système de l'invention, on peut visualiser les déplacements de l'arbre et du palier, les déformations de l'arbre, les variations du jeu, etc.

**Revendications**

1. Système d'analyse des mouvements vibratoires d'une machine tournante comportant au moins un arbre (6) supporté par au moins un palier (4), ce système comprenant des moyens ( 18, 26, 28, 36) de visualisation et, pour chaque palier et la partie de l'arbre supportée par celui-ci:

– deux premiers capteurs (2a, 2b) dont chacun est susceptible d'émettre un signal électrique fonction des déplacements relatifs dans une direction prédéterminée de l'arbre (6) par rapport au palier (4), ces premiers capteurs étant disposés dans le palier, en regard de l'arbre, de façon que leurs directions respectives fassent entre eux un angle donné;
– deux seconds capteurs (8a, 8b) dont chacun est susceptible d'émettre un signal électrique fonction des déplacements absolus du palier (4) dans une direction prédéterminée, ces seconds capteurs étant disposés au niveau du palier de façon que leurs directions respectives fassent entre eux un angle donné;
– des moyens de commande et des moyens de détection (9, 10) reliés aux premiers et aux seconds capteurs;
– des moyens de combinaison (14) des signaux électriques issus des moyens de détection (10) permettant de déterminer les mouvements absolus de l'arbre; étant caractérisé en ce qu'il comprend de plus:
– des moyens (24) pour former simultanément sur les moyens de visualisation (18, 26, 28, 36) deux ensembles de cercles (30, 32), les deux ensembles étant imbriqués de sorte que chaque cercle (30) du premier ensemble se trouve à l'intérieur d'un cercle (32) du deuxième ensemble pour représenter la partie d'arbre (6) dans son palier;
– des moyens de composition (22) pour animer ces cercles à partir des signaux électriques fonction des déplacements des arbres et des paliers, les mouvements des cercles (30) du premier ensemble représentant les déplacements des arbres dans les paliers et les mouvements des cercles (32) du deuxième ensemble représentant les déplacements des paliers; et
– une mémoire (34), reliée au moyen de composition (22), dans laquelle est mémorisée la morphologie de la machine permettant de positionner sur les moyens de visualisation chaque couple de cercles (30, 32) par rapport aux autres couples (30, 32) de façon à représenter l'image réelle de la machine en coupe suivant des plans perpendiculaires à son axe longitudinal.

2. Système d'analyse selon la revendication 1, caractérisé en ce que l'un des premiers capteurs (2a) est aligné avec l'un des seconds capteurs (8a) et en ce que l'autre premier capteur (2b) est aligné avec l'autre second capteur (8b).

3. Système d'analyse selon l'une quelconque des revendications 1 et 2, caractérisé en ce que les deux premiers capteurs (2a, 2b) sont des capteurs de déplacement.

4. Système d'analyse selon la revendication 3, caractérisé en ce que les capteurs de déplacements (2a, 2b) sont des capteurs à courant de Foucault.

5. Système d'analyse selon l'une quelconque des revendications 1 à 4, caractérisé en ce que, les deux seconds capteurs (8a, 8b) étant des accéléromètres, il comprend, de plus, des moyens (56, 58) de double intégration des signaux électriques issus de ces seconds capteurs, ces moyens d'intégration étant alors placés avant les moyens de combinaison (14) des signaux.

6. Système d'analyse selon l'une quelconque des revendications 1 à 4, caractérisé en ce que, les deux seconds capteurs (8a, 8b) étant des capteurs de vitesse, il comprend, de plus, des moyens (56) d'intégration simple des signaux électriques issus de ces seconds capteurs, ces moyens d'intégration étant alors placés avant les moyens (14) de combinaison des signaux.

7. Système d'analyse selon l'une quelconque des revendications 1 à 4, caractérisé en ce que les deux seconds capteurs (8a, 8b) sont des capteurs de déplacement.

8. Système d'analyse selon la revendication 7, caractérisé en ce que les deux seconds capteurs de déplacement (8a, 8b) sont des capteurs à courants de Foucault.

9. Système d'analyse selon l'une quelconque des revendications 1 à 8, caractérisé en ce qu'il comprend, de plus, des moyens (64) de suppression de la polarisation des signaux électriques issus des premiers capteurs (2a, 2b) et/ou des seconds capteurs (8a, 8b).

10. Système d'analyse selon l'une quelconque des revendications 1 à 9, caractérisé en ce qu'il comprend, de plus, des moyens (12) d'amplification des signaux électriques issus des premiers et des seconds capteurs.

11. Système d'analyse selon l'une quelconque des revendications 1 à 10, caractérisé en ce qu'il comprend, aussi, des moyens (48, 50, 52) permettant de supprimer les signaux électriques parasites issus des premiers capteurs (2a, 2b) qui ne sont pas fonction des déplacements de l'arbre (6).

12. Système d'analyse selon l'une quelconque des revendications 1 à 11, caractérisé en ce qu'il comprend, encore, des moyens (20) permettant de calibrer l'amplitude des signaux électriques issus des premiers et des seconds capteurs.

13. Système d'analyse selon l'une quelconque des revendications 1 à 12, caractérisé en ce que l'angle que font les deux premiers capteurs (2a, 2b) entre eux et les deux seconds capteurs (8a, 8b) entre eux est égal à 90°.

14. Système d'analyse selon l'une quelconque des revendications 1 à 13, caractérisé en ce que les moyens de visualisation comprennent:

– une unité de visualisation (18) à deux entrées X et Y munie d'un écran (16) et d'une commande de Wehnelt; et
– un système de multiplexage (26, 28) à quatre entrées par palier et à deux sorties correspondant aux entrées X et Y de l'unité de visualisation.

15. Système d'analyse selon l'une quelconque des revendications 1 à 14, caractérisé en ce que les moyens de visualisation comprennent aussi, des moyens (36) permettant de ralentir l'animation des cercles.

16. Système d'analyse selon l'une quelconque des revendications 1 à 15, caractérisé en ce que les moyens pour former les deux ensembles de cercles (30, 32) sont constitués d'un générateur (24) engendrant deux ensembles de signaux électriques sinusoïdaux déphasés d'un angle de $\pi/2$.

17. Système d'analyse selon l'une quelconque des revendications 14 et 15, caractérisé en ce que les moyens permettant de ralentir l'animation des cercles sont constitués d'un stroboscope de fréquence réglable (36) connecté à la commande de Wehnelt de l'unité de visualisation (18).

18. Système d'analyse selon la revendication 17, caractérisé en ce qu'il comprend, de plus, des moyens (38) pour afficher la fréquence d'animation des cercles, reliés au stroboscope (36).

19. Système d'analyse selon l'une quelconque des revendications 1 à 18, caractérisé en ce qu'il comprend, de plus, des moyens (40) permettant de sélectionner, soit les mouvements absolus des arbres et des paliers, soit les mouvements relatifs des arbres par rapport aux paliers.

20. Système d'analyse selon l'une quelconque des revendications 5 et 6, caractérisé en ce qu'il comprend, de plus, des moyens d'amplification (60) des signaux électriques issus des moyens d'intégration simple (56) ou des moyens de double intégration (56, 58).

21. Système d'analyse selon l'une quelconque des revendications 1 à 20, caractérisé en ce qu'il comprend, encore, des moyens permettant de mesurer directement les valeurs des déplacements des arbres et des paliers et les déphasages des différents mouvements observés.

22. Système d'analyse selon l'une quelconque des revendications 1 à 21, permettant l'analyse des mouvements vibratoires de plusieurs machines tournantes comportant chacune au moins un arbre supporté par au moins un palier, caractérisé en ce qu'il comprend des moyens (42) permettant la mémorisation des positions respectives des cercles animés correspondant à chacune desdites machines.

**Patentansprüche**

1. System zur Analyse von Vibrationsbewegungen einer Maschine mit rotierendem Teil, enthaltend wenigstens eine Welle (6), die von wenigstens einem Lager (4) getragen wird, wobei das System Einrichtungen (18, 26, 28, 36) zur optischen Anzeige und für jedes Lager der Welle, die durch sie getragen ist, enthält:

– zwei erste Messfühler (2a, 2b), von denen jeder dazu geeignet ist, ein elektrisches Signal abzugeben, das von den gegenseitigen Verschiebungen in einer vorbestimmten Richtung der Welle (6) gegenüber dem Lager (4) abhängt, wobei diese ersten Messfühler in dem Lager, der Welle gegenüberstehend derart angeordnet sind, dass ihre entsprechenden Richtungen zwischen sich einen gegebenen Winkel einschliessen;
– zwei zweite Messfühler (8a, 8b), von denen jeder dazu geeignet ist, ein elektrisches Signal abzugeben, das von den Absolutverschiebungen des Lagers (4) in einer vorbestimmten Richtung abhängt, wobei die zweiten Messfühler in der Höhe des Lagers derart angeordnet sind, dass ihre entsprechenden Richtungen zwischen sich einen gegebenen Winkel einschliessen;
– Steuereinrichtungen und Detektoreinrichtungen (9, 10), die mit den ersten und zweiten Wandlern verbunden sind;
– Kombinationseinrichtungen (14) für die von den Detektoreinrichtungen (10) abgegebenen elektrischen Signale, die die Bestimmung der Absolutbewegungen der Welle gestatten;

dadurch gekennzeichnet, dass es darüber hinaus enthält:

– Einrichtungen (24), um simultan auf den optischen Anzeigeeinrichtungen (18, 26, 28, 36) zwei Kreisgruppen (30, 32) zu bilden, die sich derart überlappen, dass jeder Kreis (30) der ersten Gruppe sich innerhalb eines Kreises (32) der zweiten Gruppe befindet, um den Teil der Welle (6) in seinem Lager darzustellen;
– Zusammenfassungseinrichtungen (22), um diese Kreise, von den elektrischen Signalen ausgehend, die eine Funktion der Verschiebungen der Wellen und der Lager sind, anzuregen, wobei die Bewegungen der Kreise (30) der ersten Gruppe die Verschiebungen der Wellen in den Lagern und die Bewegungen der Kreise (32) der zweiten Gruppe die Verschiebungen der Lager darstellen; und
– einen Speicher (34), der mit der Zusammenfassungseinrichtung (22) verbunden ist, in welchem der Aufbau der Maschine gespeichert ist und es gestattet, auf den Anzeigeeinrichtungen jedes Kreispaar (30, 32) in bezug auf andere Kreispaare (30, 32) so zu positionieren, dass ein reelles Bild der Maschine im Schnitt dargestellt wird, der in Ebenen senkrecht zu ihrer Längsachse verläuft.

2. Analysesystem nach Anspruch 1, dadurch gekennzeichnet, dass einer der ersten Messfühler (2a) mit einem der zweiten Messfühler (8a) ausgerichtet ist und dass der andere erste Messfühler (2b) mit dem anderen zweiten Messfühler (8b) ausgerichtet ist.

3. Analysesystem nach einem der Ansprüche 1 und 2, dadurch gekennzeichnet, dass die zwei ersten Messfühler (2a, 2b) Verschiebungsmessfühler sind.

4. Analysesystem nach Anspruch 3, dadurch gekennzeichnet, dass die Verschiebungsmessfühler (2a, 2b) Foucaultstrom-Messfühler sind.

5. Analysesystem nach einem der Ansprüche 1 bis 4, dadurch gekennzeichnet, dass die zwei zweiten Messfühler (8a, 8b) Beschleunigungsmesser sind und dass es darüber hinaus Einrichtungen (56, 58) zur doppelten Integration der elektrischen Signale aufweist, die von diesen zweiten Messfühlern abgegeben werden, wobei die Integrationseinrichtungen daher vor den Signalkombinationseinrichtungen (14) angeordnet sind.

6. Analysesystem nach einem der Ansprüche 1 bis 4, dadurch gekennzeichnet, dass die zwei zweiten Messfühler (8a, 8b) Geschwindigkeitsmessfühler sind und dass es darüber hinaus Einrichtungen (56) zur einfachen Integration der elektrischen Signale aufweist, die von diesen zweiten Messfühlern abgegeben werden, wobei die Integrationseinrichtungen daher vor den Signalkombinationseinrichtungen (14) angeordnet sind.

7. Analysesystem nach einem der Ansprüche 1 bis 4, dadurch gekennzeichnet, dass die zwei zweiten Messfühler (8a, 8b) Verschiebungsmessfühler sind.

8. Analysesystem nach Anspruch 7, dadurch gekennzeichnet, dass die zwei zweiten Verschiebungsmessfühler (8a, 8b) Foucaultstrom-Messfühler sind.

9. Analysesystem nach einem der Ansprüche 1 bis 8, dadurch gekennzeichnet, dass es darüber hinaus Einrichtungen (64) zur Unterdrückung der Polarisation der elektrischen Signale enthält, die von den ersten Messfühlern (2a, 2b) und/oder den zweiten Messfühler (8a, 8b) abgegeben werden.

10. Analysesystem nach einem der Ansprüche 1 bis 9, dadurch gekennzeichnet, dass es darüber hinaus Einrichtungen (12) zur Verstärkung der elektrischen Signale aufweist, die von den ersten und den zweiten Messfühlern abgegeben werden.

11. Analysesystem nach einem der Ansprüche 1 bis 10, dadurch gekennzeichnet, dass es auch Einrichtungen (48, 50, 52) enthält, die die Unterdrückung elektrischer Störsignale erlauben, die von den ersten Messfühlern (2a, 2b) abgegeben werden, die keine Funktion der Verschiebungen der Welle (6) sind.

12. Analysesystem nach einem der Ansprüche 1 bis 11, dadurch gekennzeichnet, dass es auch noch Einrichtungen (20) aufweist, die die Kalibrierung der Amplitude der elektrischen Signale erlauben, die von den ersten und den zweiten Messfühlern abgegeben werden.

13. Analysesystem nach einem der Ansprüche 1 bis 12, dadurch gekennzeichnet, dass der Winkel, den die zwei ersten Messfühler (2a, 2b) zwischen sich bilden und die zwei zweiten Messfühler (8a, 8b) zwischen sich bilden, gleich 90° beträgt.

14. Analysesystem nach einem der Ansprüche 1 bis 13, dadurch gekennzeichnet, dass die Anzeigeeinrichtungen enthalten:

– eine Anzeigeeinheit (18) mit zwei Eingängen X und Y, die mit einem Bildschirm (16) und einer Wehneltsteuerung versehen ist; und
– ein Multiplexsystem (26, 28) mit vier Eingängen pro Lager und zwei Ausgängen, die den Eingängen X und Y der Anzeigeeinheit entsprechen.

15. Analysesystem nach einem der Ansprüche 1 bis 14, dadurch gekennzeichnet, dass die Anzeigeeinrichtung ausserdem Einrichtungen (36) enthalten, die die Verlangsamung der Anregung der Kreise gestatten.

16. Analysesystem nach einem der Ansprüche 1 bis 15, dadurch gekennzeichnet, dass die Einrichtungen zum Bilden der zwei Kreisgruppen (30, 32) von einem Generator (24) gebildet sind, der zwei Gruppen sinusförmiger Signale liefert, die um einen Winkel von $\pi/2$ gegeneinander phasenversetzt sind.

17. Analysesystem nach einem der Ansprüche 14 und 15, dadurch gekennzeichnet, dass die Einrichtungen, die die Verlangsamung der Anregung der Kreise gestatten, von einem Stroboskop regelbarer Frequenz (36) gebildet sind, das mit der Wehneltsteuerung der Anzeigeeinheit (18) verbunden ist.

18. Analysesystem nach Anspruch 17, dadurch gekennzeichnet, dass es darüber hinaus Einrichtungen (38) zur Sichtbarmachung der Kreisanregungsfrequenz enthält, die mit dem Stroboskop (36) verbunden sind.

19. Analysesystem nach einem der Ansprüche 1 bis 18, dadurch gekennzeichnet, dass es darüber hinaus Einrichtungen (40) enthält, die es gestatten, die Absolutbewegungen der Wellen und der Lager oder die Relativbewegungen der Wellen gegenüber den Lagern auszuwählen.

20. Analysesystem nach einem der Ansprüche 5 und 6, dadurch gekennzeichnet, dass es darüber hinaus Verstärkungseinrichtungen (60) für die elektrischen Signale enthält, die von den Einfachintegrationseinrichtungen (56) oder von den Doppelintegrationseinrichtungen (56, 58) abgegeben werden.

21. Analysesystem nach einem der Ansprüche 1 bis 20, dadurch gekennzeichnet, dass es auch noch Einrichtungen enthält, die die direkte Messung der Verschiebungswerte der Wellen und der Lager und die Phasenabweichungen der unterschiedlichen beobachteten Bewegungen gestatten.

22. Analysesystem nach einem der Ansprüche 1 bis 21, das die Analyse von Vibrationsbewegungen von mehreren Maschinen mit drehendem Teil gestattet, von denen jede wenigstens eine Welle enthält, die von wenigstens einem Lager getragen ist, dadurch gekennzeichnet, dass es Einrichtungen (42) enthält, die die Speicherung der entsprechenden Positionen der angeregten Kreise entsprechend einer jeden der genannten Maschinen gestatten.

### Claims

1. Analysis system for vibratory movements of a rotating machine comprising at least one shaft (6) supported by at least one bearing (4), said system comprising display means (18, 26, 28, 36) and, for each bearing and for the shaft portion supported thereby:

- two first sensors (2a, 2b) each of which is adapted to emit an electrical signal as a function of relative displacement of the shaft (6) with respect to the bearing (4) in a predetermined direction, said first sensors being disposed within the bearing facing the shaft, so that their respective directions are at a predetermined angle to one another;
- two second sensors (8a, 8b) each of which is adapted to emit an electrical signal as a function of absolute displacement of the bearing (4) in a predetermined direction, said second sensors being located at a position of the bearing such that their respective directions are at a predetermined angle to one another;
- command means and detection means (9, 10) connected to said first and second sensors;
- combination means (14) for electrical signals emitted from the detection means (10) enabling determination of the absolute movements of the shaft;

being characterised in that it additionally comprises:
- means (24) for simultaneously producing on the display means (18, 26, 28, 36) two assemblies of circles (30, 32), the two assemblies overlapping so that each circle (30) of the first assembly is located inside a circle (32) of the second assembly to represent the portion of the shaft (6) in its bearing;
- composition means (22) to animate the circles by means of the electrical signals which are a function of displacements of the shafts and bearings, the movements of the circles (30) of the first assembly representing displacements of the shafts in the bearings, and the movements of the circles (32) of the second assembly representing displacements of the bearings; and
- a memory (34), connected to the composition means (22), and within which the morphology of the machine is memorized, enabling the positioning of each pair of circles (30, 32) with respect to the other pair (30, 32) on the display means, whereby to represent the actual image of the machine in cross-section along planes perpendicular to its longitudinal axis.

2. Analysis system according to claim 1, characterised in that one of the first sensors (2a) is aligned with one of the second sensors (8a) and in that the other first sensor (2b) is aligned with the other second sensor (8b).

3. Analysis system according to either of claims 1 and 2, characterised in that the two first sensors (2a, 2b) are displacement-sensors.

4. Analysis system according to claim 3, characterised in that the displacement sensors (2a, 2b) are eddy current sensors.

5. Analysis system according to any one of claims 1 to 4, characterised in that, the second sensors (8a, 8b) being accelerometers, it additionally comprises means (56, 58) for double integration of the electrical signals emitted from said second sensors, said integration means being located before the signal combination means (14).

6. Analysis system according to any of claims 1 to 4, characterised in that, the two second sensors (8a, 8b) being velocity-sensors, it additionally comprises means (56) for simple integration of the electrical signals emitted by said second sensors, the integration means being located before the signal combination means (14).

7. Analysis system according to any one of claims 1 to 4, characterised in that the two second sensors (8a, 8b) are displacement sensors.

8. Analysis system according to claim 7, characterised in that the two second displacement sensors (8a, 8b) are eddy current sensors.

9. Analysis system according to any one of claims 1 to 8, characterised in that it additionally comprises means (64) for suppression of the polarisation of electrical signals emitted by the first sensors (2a, 2b) and/or the second sensors (8a, 8b).

10. Analysis system according to any one of claims 1 to 9, characterised in that it additionally comprises means (12) for amplification of the electrical signals emitted by the first and second sensors.

11. Analysis system according to any one of claims 1 to 10, characterised in that it additionally comprises means (48, 50, 52) enabling suppression of parasitic electrical signals emitted by the first sensors (2a, 2b) which are not functions of displacements of the shaft (6).

12. Analysis system according to any one of claims 1 to 11, characterised in that it also comprises means (20) for calibrating the amplitude of electrical signals emitted by the first and second sensors.

13. Analysis system according to any one of claims 1 to 12, characterised in that the angle between the two first sensors (2a, 2b) and the angle between the two second sensors (8a, 8b) is equal to 90°.

14. Analysis system according to any one of claims 1 to 13, characterised in that the display means comprise:

- a display unit (18) with two inputs X and Y comprising a screen (15) and a Wehnelt control; and
- a multiplexing system (26, 28) having four inputs from a bearing, and two outputs corresponding to the inputs X and Y of the display unit.

15. Analysis system according to any one of claims 1 to 14, characterised in that the display means additionally comprises means (36) enabling slowing down of motions of the circles.

16. Analysis system according to any one of claims 1 to 15, characterised in that the means for forming the two assemblies of circles (30, 32) comprise a generator (24) producing two assemblies of sinusoidal electrical signals, out of phase by an angle of $\pi/2$.

17. Analysis system according to either of claims 14 and 15, characterised in that the means enabling slowing down of motions of the circles comprise a stroboscope of controllable frequency (36) connected to the Wehnelt command of the display unit (18).

18. Analysis system according to claim 17, characterised in that it additionally comprises means (38) for displaying the motions of the circles, connected to the stroboscope (36).

19. Analysis system according to any one of claims 1 to 18, characterised in that it additionally comprises means (40) for selecting either absolute movements of the shafts and bearings, or relative movements of the shafts with respect to the bearings.

20. Analysis system according to either of claims 5 and 6, characterised in that it additionally comprises amplification means (60) for electrical signals emitted by the simple integration means (56) or the double integration means (56, 58).

21. Analysis system according to any one of claims 1 to 20, characterised in that it also comprises means for directly measuring the magnitude of displacements of the shafts and bearings and the phase differences between the different movements observed.

22. Analysis system according to any one of claims 1 to 21, enabling analysis of vibratory movements of a plurality of rotating machines, each comprising at least one shaft supported by at least one bearing, characterised in that it comprises means (42) enabling memorisation of the respective positions of movable circles corresponding to each of said machines.

FIG.1

FIG.2

FIG.3

FIG.4a

FIG.4b

FIG.4c

FIG.4d

FIG.4e

FIG.4f